# EUROPEAN PATENT APPLICATION

(11) **EP 2 563 002 A1**
(43) Date of publication of application: **27.02.2013**
(21) Application number: 12160274.2
(22) Date of filing: 20.03.2012
(51) Int. Cl.: H04N 1/00

(54) **Image scanning apparatus and method of scanning**

(30) Priority: 23.08.2011 KR 20110083856
(71) Applicant: Samsung Electronics Co., Ltd., Suwon-si, Gyeonggi-do, 443-742 (KR)
(72) Inventor: Kim, Dae-hyun, Yongin-si (KR)
(74) Representative: Waddington, Richard

(57) **Abstract**

An image scanning apparatus is provided. The image scanning apparatus includes a DLNA apparatus search unit to search at least one DLNA apparatus connectible to the image scanning apparatus, a user interface to select at least one of the searched DLNA apparatus, a communication interface to obtain apparatus information from the selected DLNA apparatus, a search unit to search a scan option based on the obtained apparatus information, a scan unit to generate a scan image by scanning a document according to the searched scan option, and a DLNA stack unit to transmit the generated scan image to the selected DLNA apparatus.

## Description

### BACKGROUND OF THE INVENTION

### 1. Field of the Invention

The present general inventive concept generally relates to an image scanning apparatus and a method of scanning, and more particularly, to an image scanning apparatus which can set a scan option and transmit a scanned image to another apparatus, and a method of scanning.

### 2. Description of the Related Art

An image scanning apparatus refers to an apparatus that scans an original image such as a document, a picture or a film and converts the image into digital data. The digital data may be displayed on a monitor of a computer or may be printed by a printer and generated as an output image. Examples of such an image scanning apparatus may be a scanner, a copier, a facsimile machine, or a multifunction peripheral (MFP), which complexly realizes the functions of the aforementioned devices in a single device.

The scanned image may be used in the image scanning apparatus, but in many cases, the scanned image may be transmitted to another apparatus. In view of this point, a related art image scanning apparatus transmits a scanned image to a server set by a user using a scan-to-server function. However, there are inconveniences in that the user should set information on the server that the user wishes to transmit the image to one-by-one, in order to use the scan-to-server function, and should set a scan option to perform scanning.

With the advance of network technology, there has been a demand for a method for transmitting a scanned image in various digital apparatuses. However, the related art scan-to-server function has the inconvenience of transmitting the scanned image to only a specific server or a specific terminal apparatus.

### SUMMARY OF THE INVENTION

The present general inventive concept provides an image scanning apparatus which can set a scan option and transmit a scanned image to another apparatus, and a method of scanning.

Additional aspects and advantages of the present general inventive concept will be set forth in part in the description which follows and, in part, will be obvious from the description, or may be learned by practice of the general inventive concept.

According to the present invention there is provided an apparatus and method as set forth in the appended claims. Other features of the invention will be apparent from the dependent claims, and the description which follows.

The foregoing and/or other features and utilities of the present general inventive concept may be achieved by providing an image scanning apparatus which is connectible to a digital living network alliance (DLNA) apparatus, the image scanning apparatus including a DLNA apparatus search unit to search at least one DLNA apparatus connectible to the image scanning apparatus, a user interface to select at least one of the searched DLNA apparatus, a communication interface to obtain apparatus information from the selected DLNA apparatus, a search unit to search a scan option based on the obtained apparatus information, a scan unit to generate a scan image by scanning a document according to the searched scan option, and a DLNA stack unit to transmit the generated scan image to the selected DLNA apparatus.

If at least one of a scan-to-DLNA command and a DLNA apparatus re-search command is input, the DLNA apparatus search unit may search the at least one DLNA apparatus.

The user interface may display a list of the at least one searched DLNA apparatus and receive selection of at least one of the at least one displayed DLNA apparatus.

The user interface may include a first area to display a list of the at least one searched DLNA apparatus and a second area to set a scan option on the document.

The search unit may search the scan option based on the scan option set through the second area and the obtained apparatus information.

The apparatus information may include a JPEG profile supported by a DLNA apparatus and an address of a DLNA apparatus.

The image scanning apparatus may further include a storage unit to store a lookup table having information on a plurality of JPEG profiles and a resolution, quality, and a file format corresponding to each of the plurality of JPEG profiles, and the search unit may search at least one of quality, a resolution, and a file format corresponding to the JPEG profile supported by the DLNA apparatus using the lookup table.

The user interface may display a scan option corresponding to each of the JPEG profiles supported by the DLNA apparatus and select a scan option to be applied to the document.

The DLNA stack unit may transmit the scan image so that the scan image is stored in a predetermined DLNA apparatus, and may transmit a storage address of the scan image stored in the predetermined DLNA apparatus to the selected DLNA apparatus.

The foregoing and/or other features and utilities of the present general inventive concept may also be achieved by providing a method of scanning a document with an image scanning apparatus which is connectible to a DLNA apparatus, the method including searching at least one DLNA apparatus connectible to the image scanning apparatus, selecting at least one of the searched DLNA apparatus, obtaining apparatus information from the selected DLNA apparatus, searching a scan option based on the obtained apparatus information, generating a scan image by scanning the document according to the searched scan option, and transmitting the generated scan image to the selected DLNA apparatus.

The searching the DLNA apparatus may include, if at least one of a scan-to-DLNA command and a DLNA apparatus re-search command is input, searching a DLNA apparatus.

The selecting may include displaying a list of the at least one searched DLNA apparatus on a user interface window and selecting at least one of the at least one displayed DLNA apparatus.

The user interface window may include a first area to display a list of the at least one searched DLNA apparatus and a second area to set a scan option on the document.

The searching may include searching the scan option based on the scan option set through the second area and the obtained apparatus information.

The apparatus information may include a JPEG profile supported by a DLNA apparatus and an address of a DLNA apparatus.

The searching may include searching at least one of quality, a resolution, and a file format corresponding to the JPEG profile supported by the DLNA apparatus using a pre-stored lookup table, and the lookup table may be a table which stores information on a plurality of JPEG profiles and a resolution, quality, and a file format corresponding to each of the plurality of JPEG profiles.

The method may further include: displaying a scan option corresponding to each of the JPEG profiles supported by the DLNA apparatus, and selecting a scan option to be applied to the document.

The transmitting may include transmitting the scan image so that the scan image is stored in a predetermined DLNA apparatus, and transmitting a storage address of the scan image stored in the predetermined DLNA apparatus to the selected DLNA apparatus.

Exemplary embodiments of the present general inventive concept may also provide a method of transmitting a scanned document, the method including requesting with an image scanning apparatus that a selected digital living network alliance (DLNA) apparatus transmit protocol information, in response to this request, transmitting information from the selected DLNA apparatus in a format and a protocol of data in accordance with the selected DLNA apparatus, requesting with the image scanning apparatus that the selected DLNA apparatus be ready to communicatively connect, and when a connection response is received from the selected DLNA apparatus, transmitting the scan image from the image scanning apparatus to the selected DLNA apparatus using the received protocol information.

Exemplary embodiments of the present general inventive concept may also provide a method of scanning a document with an image scanning apparatus and transmitting the scanned document to at least one digital living network alliance (DLNA) apparatus, the method including selecting the at least one DLNA apparatus from a list of searched DLNA apparatuses, obtaining apparatus information from the selected at least one DLNA apparatus, generating a scan image by scanning the document according to a searched scan option of the obtained apparatus information from the selected at least one DLNA apparatus, and transmitting the generated scan image to the selected at least one DLNA apparatus.

### BRIEF DESCRIPTION OF THE DRAWINGS

These and/or other embodiments of the present general inventive concept will become apparent and more readily appreciated from the following description of the embodiments, taken in conjunction with the accompanying drawings of which:

FIG. 1 is a block diagram illustrating an image scanning apparatus according to exemplary embodiments of the present general inventive concept;

FIG. 2 is a view illustrating a method of exchanging data between a digital living network alliance (DLNA) apparatus and an image scanning apparatus using a DLNA network according to exemplary embodiments of the present general inventive concept;

FIGS. 3 and 4 are views illustrating examples of user interface windows displayed on a user interface according to exemplary embodiments of the present general inventive concept;

FIGS. 5 and 6 are views illustrating examples of apparatus information of a DLNA apparatus according to exemplary embodiments of the present general inventive concept

FIG. 7 is a view illustrating examples of JPEG profiles according to exemplary embodiments of the present general inventive concept;

FIG. 8 is a view illustrating types of JPEG and setting values defined by the DLNA specification according to exemplary embodiments of the present general inventive concept;

FIG. 9 is a view illustrating an example of a lookup table according to exemplary embodiments of the present general inventive concept;

FIG. 10 is a flowchart illustrating an example of a method of scanning according to exemplary embodiments of the present general inventive concept; and

FIG. 11 is a view illustrating a detailed operation of transmitting a document scanned according to FIG. 10 according to exemplary embodiments of the present general inventive concept.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to like elements throughout. The embodiments are described below in order to explain the present general inventive concept by referring to the figures.

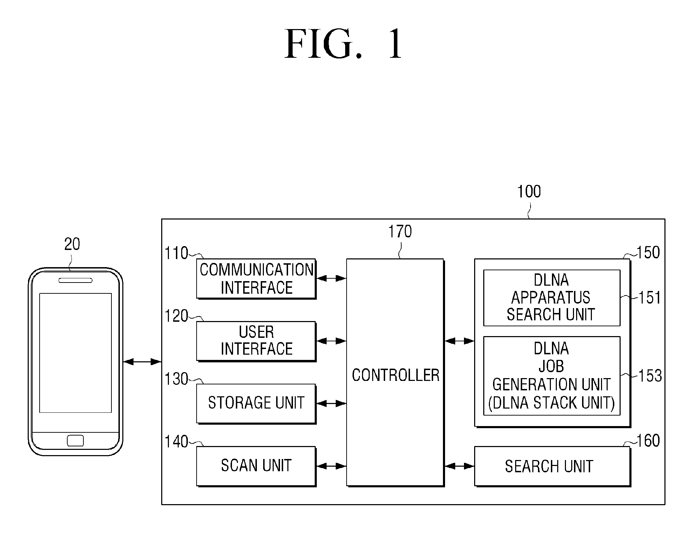

FIG. 1 is a block diagram illustrating an image scanning apparatus according to exemplary embodiments of the present general inventive concept.

Referring to FIG. 1, an image scanning apparatus 100 is illustrated according to exemplary embodiments of the present general inventive concept. The image scanning apparatus 100 can be a digital living network alliance (DLNA) apparatus that shares contents with another DLNA apparatus 20 over a DLNA network. The DLNA network may be a wired and/or wireless communication network. For example, the image scanning apparatus 100 may be one of a digital media server (DMS), a digital media player (DMP), and a digital media renderer (DMR) which may render, manipulate, and/or process one or more types of digital media (e.g., according to one or more predetermined DLNA guidelines and/or specifications). The image scanning apparatus 100 may also be one of a mobile digital media server (M-DMS). The DLNA apparatus 20 may be a digital media player (DMP) or a mobile digital media player (M-DMP). The DLNA apparatus 20 may be a cell phone, smart phone, digital media player, tablet computer, personal computer, and/or any other suitable DLNA apparatus to carry out the exemplary embodiments of the present general inventive concept disclosed herein.

The DMS may be a media server device (MSD) in an UPnP AV (Universal Plug and Play Audio/Video) area. That is, the MSD may provide digital media contents, perform a search of the digital media contents in the DMS, and allow a DLNA network user to display or distribute the contents in the DMS. For example, the DMS may include a video cassette recorder (VCR), a digital video recorder (DVR), a compact disk (CD) player, a digital versatile disk (DVD) player, an MP3 (Moving Picture Experts Group Audio Layer III) player, a set-top box, a TV tuner, a radio tuner, a tablet computer, and a personal computer (PC).

The DMR may execute a selected media (e.g., execute the playback of the selected media, execute the display of the selected media), and may include a TV and at least one stereo speaker. The DMP may be a DMR including a control point (CP) (UPnP CP), and may be a media renderer device (MRD) and a media render control point (MRCP). That is, the DMP may select media contents, as well as execute and/or control the selected media contents.

More specifically, the image scanning apparatus 100 can include a communication interface 110, a user interface 120, a storage unit 130, a scan unit 140, a DLNA agent unit 150, a search unit 160, and a controller 170.

The communication interface 110 may be a modem, a network card, and/or any other suitable communication interface that can be connected (i.e., communicatively coupled) to the DLNA network and can share contents (e.g., an image file) with another DLNA apparatus 20 over the DLNA network. More specifically, the communication interface 110 of the image scanning apparatus 100 communicates with another DLNA apparatus 20 over the DLNA network according to, for example, an UPnP standard, to receive the contents stored in the another DLNA apparatus 20 and provide the contents of the image scanning apparatus 100 (e.g., from the scan unit 140 and/or the storage unit 130 of the image scanning apparatus 100).

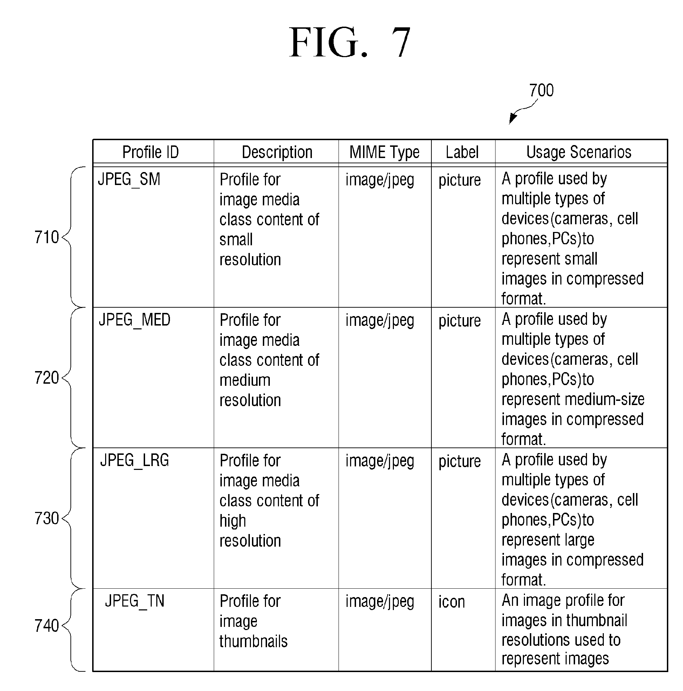

The communication interface 110 may search a connectible DLNA apparatus (e.g., the another DLNA apparatus 20). More specifically, the communication interface 110 may search a DLNA apparatus over the DLNA network under control of a DLNA apparatus search unit 151, which will be described later, and obtains apparatus information on the searched DLNA apparatus. The apparatus information recited herein refers to information on a JPEG profile supported by the DLNA apparatus and an address of the DLNA apparatus. Examples of JPEG profiles are illustrated and described in connection with FIG. 7.

The communication interface 110 may transmit a generated scan image to the selected DLNA apparatus. More specifically, the communication unit 110 may transmit the scan image generated by the scan unit 140 to the DLNA apparatus selected by the user under control of a DLNA job generation unit 153, which will be described later.

The user interface 120 can include a plurality of function keys through which a user may set and/or select one or more functions supported by the image scanning apparatus 100, and may display information (e.g., information that corresponds to the one or more supported functions) provided by the image scanning apparatus 100. The user interface 120 may be a device to input and output simultaneously, such as a touch pad, or may be a device combining a mouse (or other suitable input device such as a keyboard and/or keypad) and a monitor.

The user interface 120 may receive a scan-to-DLNA command from the user. The scan-to-DLNA command is a user's command to scan a document (e.g., with the scan unit 140) and transmit the scanned document to another DLNA apparatus (e.g., the another DLNA apparatus 20). The scan-to-DLNA command may be received through the user interface 120 in the image scanning apparatus 100 and may be received through an external apparatus connected to the image scanning apparatus 100 via a wired and/or wireless communications link. The user interface 120 may receive a DLNA apparatus re-search command from the user. The DLNA apparatus re-search command may be a command to re-search a connectible DLNA apparatus (e.g., a DLNA apparatus that is communicatively coupled to image scanning apparatus 100).

The user interface 120 may display at least one searched DLNA apparatus. More specifically, the user interface 120 may display the DLNA apparatus searched by the DLNA apparatus search unit 151, which will described later, in the form of a list. The user interface 120 may display a UI area to set a scan option.

The user interface 120 may select a DLNA apparatus to transmit the document to from the image scanning apparatus 100, from the at least one displayed DLNA apparatus. The user interface 120 may select one DLNA apparatus or a plurality of DLNA apparatuses to transmit the document to from the image scanning apparatus 100.

The user interface 120 may display a user interface window including a scan option which is selectable by the user. In exemplary embodiments of the present general inventive concept, the user interface 120 may display only a scan option for the selected DLNA apparatus using the apparatus information corresponding to the selected DLNA apparatus. The user interface 120 may display all of the options that can be selected by the user, and can display an option that is not supported and/or available for the selected DLNA apparatus along with a predetermined icon.

The scan option refers to an option of a scanning operation of the scan unit 140, such as a scan area, a scan resolution, information on whether color scanning is performed or not, and information on whether duplex scanning is performed or not.

The user interface 120 may display a resulting image in advance (e.g., a a preview image) if the option selected by the user is applied. More specifically, the user interface 120 may display a result of processing an image in the form of a preview if the scan option selected by the user is applied. Accordingly, the user can select the scan option.

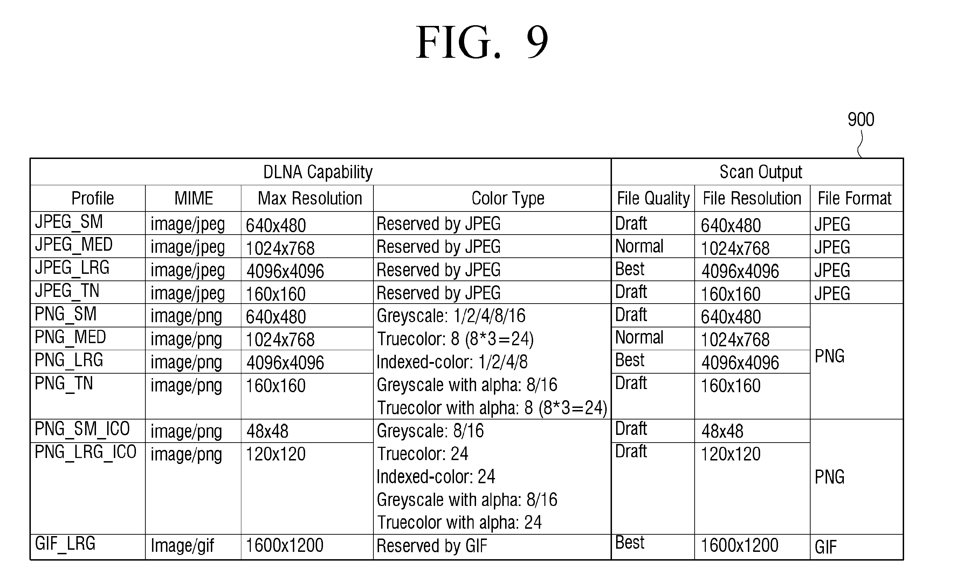

The storage unit 130 can store a lookup table having information on a plurality of JPEG profiles and a resolution, quality, and a file format corresponding to each of the plurality of JPEG profiles. An example of the lookup table is illustrated and described in connection with FIG. 9. The storage unit 130 may be a hard disc drive (HDD), a solid state drive (SSD), and/or at least one memory device (e.g., a non-volatile memory device, a flash memory, etc.).

The storage unit 130 may store a scanned image. More specifically, the storage unit 130 may store a scan image that is generated by the scan unit 140, which will be described later. The storage unit 130 may temporarily store a DLNA job generated by the DLNA job generation unit 153. The storage unit 130 may be include an inner storage medium that is contained within the image scanning apparatus 100, and/or an external storage medium that is communicatively coupled to the image scanning apparatus 100, and may be, for example, a removable disk including a USB (Universal Serial Bus) memory.

The scan unit 140 can generate scan data by scanning a document. More specifically, the scan unit 140 may include an image sensor to capture an image, a flatbed or an automatic document feeder (ADF), and can scan a document placed on the flatbed or supplied from the ADF with the image sensor, to thereby generate digital image data.

The scan unit 140 may generate a scan image. More specifically, the scan unit 140 may scan the document according to a scan option that is searched by the search unit 160, which will be described later. When a scan option is set through the user interface 120, the scan unit 140 may scan the document according to the scan option set through the user interface 120. When the scan option searched by the search unit 160 is different from the scan option set through the user interface 120, the scan unit 140 may give priority to the scan option set through the user interface 120 and apply the scan option first.

The scan unit 140 may perform image-processing on the scanned image. More specifically, the scan unit 140 may image process the scanned image using the apparatus information of the DLNA apparatus obtained through the communication interface 110. For example, the scan unit 140 may process the scanned image using an image profile (including a resolution) and a color type (e.g., grayscale, color type, etc.).

Although the processing can be performed according to only the scan option of the user in exemplary embodiments of the present general inventive concept, the scanned image may be converted according to an image processing option set by the user. For example, the scan unit 140 may perform one or more image processing operations that can be performed by a general image scanning apparatus, such as enlarging/reducing and/or cropping regarding a size of an image, as well as color correcting and/or brightness adjusting regarding color.

The DLNA agent unit 150 may search a DLNA apparatus communicatively coupled to the DLNA network and generate a DLNA job so that a data transmission complying with the DLNA standard can be performed. More specifically, the DLNA agent unit 150 may include the DLNA apparatus search unit 151 and the DLNA job generation unit 153. The DLNA agent unit 150 may be an integrated circuit, a processor, a programmable logic device, a field programmable gate array, and/or any other suitable device to carry out the exemplary embodiments of the present general inventive concept. The DLNA agent unit 150, including the DLNA apparatus search unit 151 and the DLNA job generation unit 153, may include a combination of hardware and/or software so as to carry out the exemplary embodiments of the present general inventive concept.

The DLNA apparatus search unit 151 can search a DLNA apparatus connected over the DLNA network. More specifically, the DLNA apparatus search unit 151 may search a DLNA apparatus connected over the DLNA network using the communication interface 110. The DLNA apparatus search unit 151 may be a simple service discovery protocol (SSDP) and a hypertext transfer protocol (HTTP) on an UPnP protocol stack.

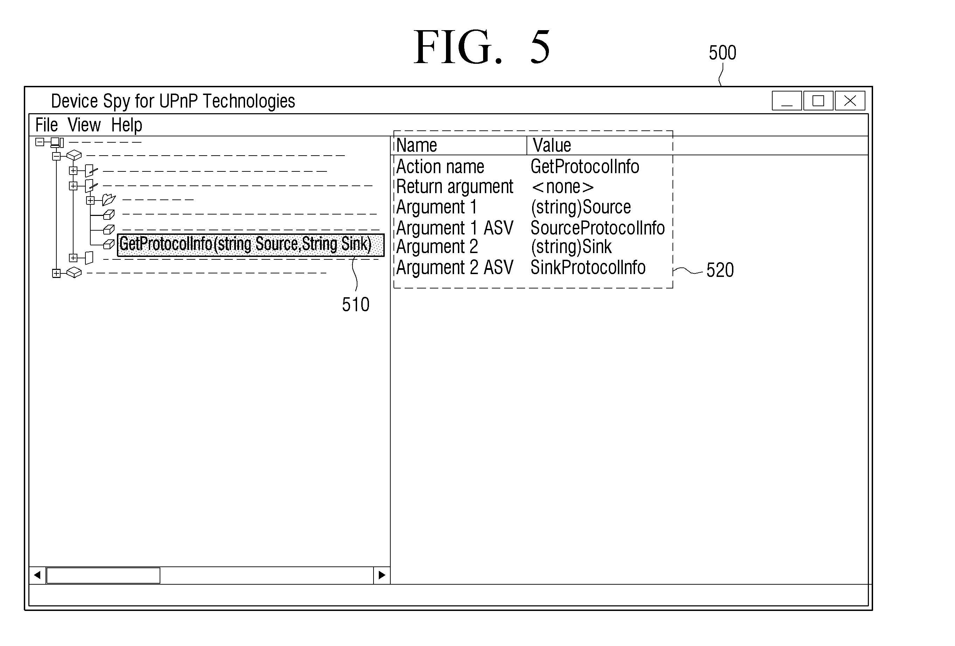

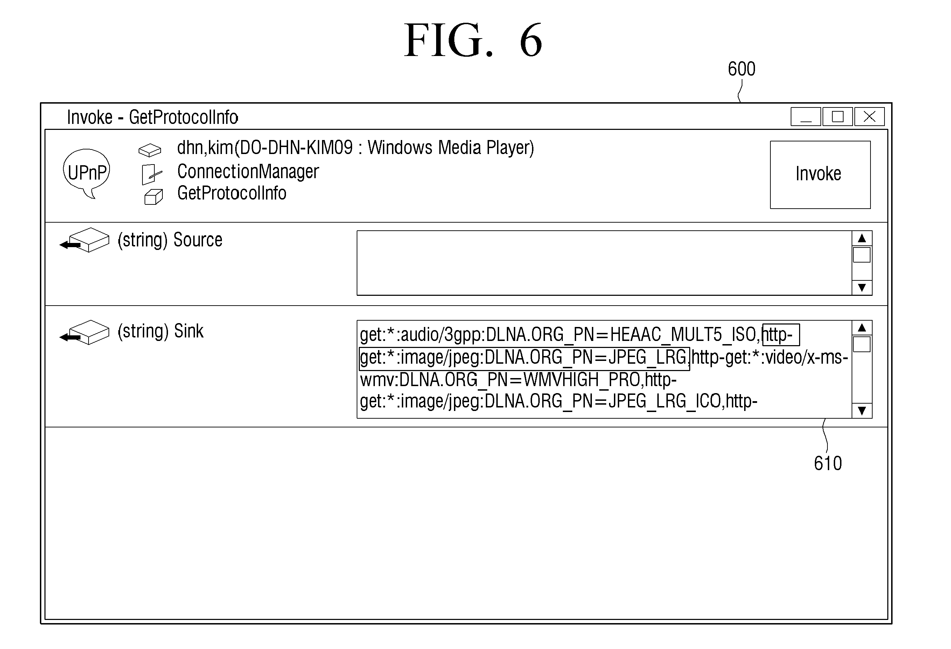

The DLNA apparatus search unit 151 may obtain apparatus information on the searched DLNA apparatus. More specifically, the DLNA apparatus search unit 151 may obtain the apparatus information on the searched DLNA apparatus using the communication interface 110. The obtained apparatus information may be provided to the search unit 160, which will be explained later. Examples of the apparatus information obtained by the DLNA apparatus search unit 151 are illustrated in FIGS. 5 and 6 (e.g., the apparatus information 520 illustrated in FIG. 5 and supported JPEG profile 610 illustrated in FIG. 6). Although only the apparatus information on the DLNA apparatus selected by the user is obtained in some exemplary embodiments, the apparatus information may be obtained in the searching operation. That is, in some exemplary embodiments of the present general inventive concept, apparatus information on all of the searched DLNA apparatuses may be obtained, and then only the apparatus information on the DLNA apparatus selected by the user may be provided to the search unit 160, which will be described later.

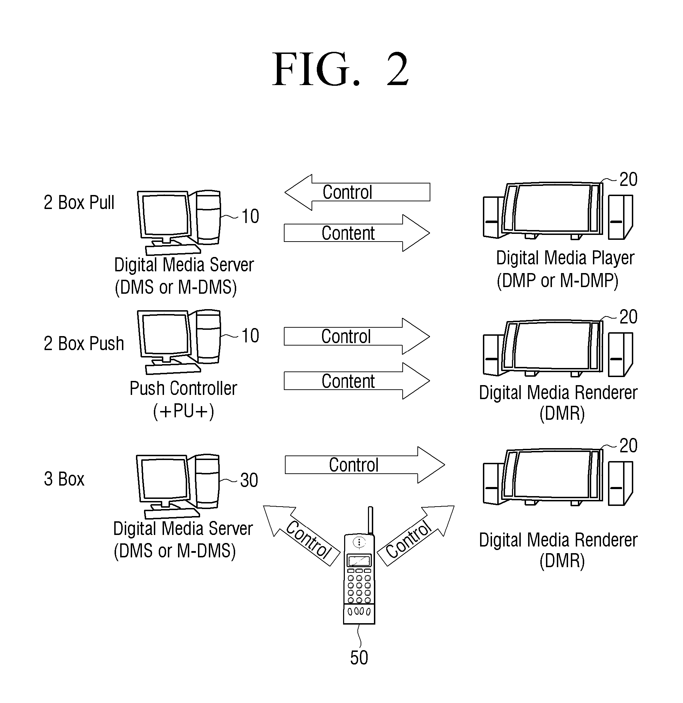

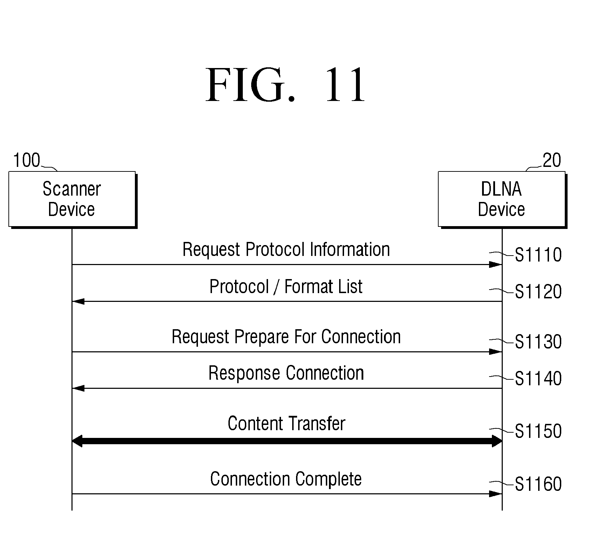

The DLNA job generation unit 153 may control the communication interface 110 to transmit the generated scan image to the selected DLNA apparatus. In exemplary embodiments of the present general inventive concept, and as illustrated in FIG. 1, the DLNA job generation unit 153 may be a DLNA stack unit to control the communication interface 110 to transmit the generated scan image to the selected DLNA apparatus. The DLNA job generation unit 153 and/or the DLNA stack unit may be an integrated circuit, a processor, a programmable logic device, a field programmable gate array, and/or any other suitable device to control the communication interface 110 according to exemplary embodiments of the present general inventive concept. A detailed operation of transmitting the generated scan image will be explained below with reference to FIGS. 2 and 11.

The search unit 160 can search a scan option according to at least the obtained apparatus information. More specifically, the search unit 160 can identify a JPEG profile supported by the selected DLNA apparatus from the obtained apparatus information, and can determine quality, a resolution, and a file format corresponding to the supported JPEG profile to be a scan option on a corresponding document using the lookup table stored in the storage unit 130. The search unit 160 may be The DLNA agent unit 150 may be an integrated circuit, a processor, a programmable logic device, a field programmable gate array, and/or any other suitable device to carry out the exemplary embodiments of the present general inventive concept. The search unit 160 may include a combination of hardware and/or software so as to carry out the exemplary embodiments of the present general inventive concept.

If the selected DLNA apparatus supports a plurality of JPEG profiles, the search unit 160 may select one JPEG profile according to pre-set priority and may use it. For example, the search unit 160 may select a JPEG profile with a highest resolution (e.g., JPEG_LRG profile 730 as illustrated in FIG. 7) and may select a JPEG profile according to color, if JPEG profiles have the same resolution.

If the user sets a scan option, the search unit 160 may search the scan option according to at least the scan option set by the user. For example, if the user sets only a resolution of 300dpi, the search unit 160 may search other scan options that are not set by the user, such as a file format and quality as described above (e.g., JPEG format having a particular predefined resolution).

If the user searches a plurality of DLNA apparatuses, the search unit 160 may select a JPEG profile which is common to the plurality of DLNA apparatuses and use it. If there is no common JPEG profile, the search unit 160 may control the scan unit 140 to perform a plurality of scan jobs.

The controller 170 can control one or more operations relating to functions of the image scanning apparatus 100. The controller 170 may be a processor, an integrated circuit, a field programmable gate array, a programmable logic device, and/or any suitable controller to carry out the exemplary embodiments of the present general inventive concept as disclosed herein. More specifically, if the user inputs a scan-to-DLNA command, the controller 170 may control the user interface 120, the scan unit 140, and the DLNA agent unit 150 to perform the above-described series of operations. The controller 170 may control the DLNA job generation unit 153 and the communication interface 110 to transmit the scan image generated by the scan unit 140 to the selected DLNA apparatus.

If the user selects a scan option on a scan job, the controller 170 may control the search unit 160 to apply the option selected by the user to the scan job.

The controller 170 may control the storage unit 130 to store the scan image generated by the scan unit 140. If the controller 170 does not receive a notification reporting that the transmission is completed from the selected DLNA apparatus within a predetermined time after having transmitted the scan image, the controller 170 may control the communication interface 110 to re-transmit the scan image. This operation may be repeated a predetermined number of times, and, if the transmission completion notification is not received while the operation is repeated the predetermined number of times, the controller 170 may control the storage unit 130 to store the scan image and may control the user interface 120 to display that the transmission is not completed.

Since the image scanning apparatus 100 according to exemplary embodiments of the present general inventive concept sets the scan option automatically using the apparatus information on another apparatus as described above, the user can transmit the image data scanned according to the scan option that is optimized for the selected DLNA apparatus to one or more DLNA apparatuses, by selecting the DLNA apparatus, so that user's convenience can be improved.

FIG. 2 is a view illustrating a method of exchanging data between a DLNA apparatus and an image scanning apparatus using a DLNA network according to exemplary embodiments of the present general inventive concept.

Referring to FIG. 2, data is transmitted according to the DLNA standard in three methods, as discussed below. FIG. 2 illustrates a first DLNA apparatus 10 and a third DLNA apparatus 30 that may be a digital media server (DMS) or a mobile digital media server (M-DMS), and a second DLNA apparatus 20 that may be a digital media player (DMP) or a mobile digital media player (M-DMP). A DLNA apparatus 50 may control the first DLNA apparatus 10, the second DLNA apparatus 20, and/or the third DLNA apparatus such that content and/or control commands may be communicated between the first DLNA apparatus 10 and the second DLNA apparatus 20, and/or between the third DLNA apparatus 30 and the second DLNA apparatus 20. The DLNA apparatus 50 may be a digital media player (DMP) or a mobile digital media player (M-DMP). The DLNA apparatus 50 may be a cell phone, smart phone, digital media player, tablet computer, personal computer, and/or any other suitable DLNA apparatus to carry out the exemplary embodiments of the present general inventive concept disclosed herein.

First, according to a '2 BOX Pull' method, a second DLNA apparatus 20 can request a first DLNA apparatus 10 to transmit content, and the first DLNA apparatus 10 can transmit the content to the second DLNA apparatus 20 in response to the request. An operation of informing a start of scanning (that is, an operation of providing a scan-to command) corresponds to an operation of the first DLNA apparatus 10 informing the second DLNA apparatus 20 of a transmission of content, and an operation of transmitting a scanned image to the selected DLNA apparatus 20 corresponds to an operation of the first DLNA apparatus 10 informing the second DLNA apparatus 20 of the transmission of content.

According to a '2 BOX Push' method (e.g., a push method or a upload method), the first DLNA apparatus 10 can inform the second DLNA apparatus 20 of a transmission of content, and the first DLNA apparatus 10 transmits the content to the second DLNA apparatus 20. If the '2 BOX Push' method is used, the image scanning apparatus 100 can inform the second DLNA apparatus 20 of a transmission of a scan job, and the image scanning apparatus 100 can transmit a scan job including a scan image to the second DLNA apparatus.

According to a '3 BOX' method, a third DLNA apparatus 30 can transmit content stored in the first DLNA apparatus 10 to the second DLNA apparatus 20. If the '3 BOX' method is used, the image scanning apparatus 100 can transmit a scanned image to the first DLNA apparatus 10 in advance using the above-described '2 BOX Pull' method or a '2 BOX Push' method, and the image scanning apparatus 100 can transmit a storage address of the scanned image stored in the first DLNA apparatus 10 to the second DLNA apparatus 20, so that the first DLNA apparatus 10 can transmit the scanned image stored therein to the second DLNA apparatus 20.

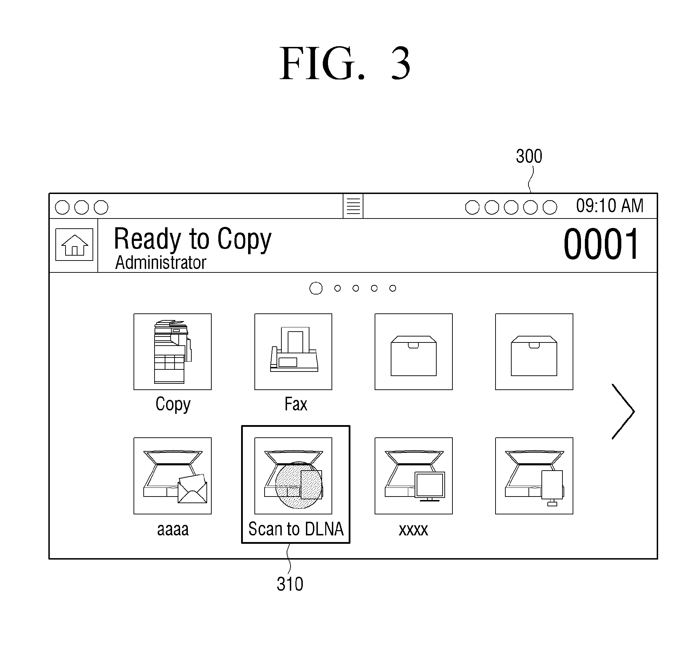

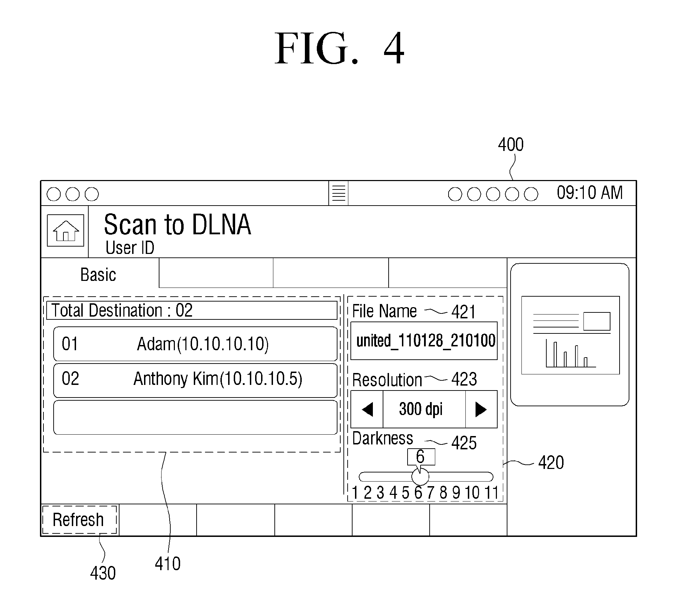

FIGS. 3 and 4 are views illustrating examples of user interface windows displayed on the user interface according to exemplary embodiments of the present general inventive concept.

Referring to FIG. 3, a user interface window 300 can display one or more functions (e.g., copy, fax, scan to DLNA, etc.) supported by the image scanning apparatus 100. If the user selects a scan-to-DLNA area 310 on the displayed Ul window 300, the user interface 120 displays a user interface window 400 illustrated in FIG. 4. Although only the scan-to-DLNA function is performed through the user interface window of the image scanning apparatus 100 as illustrated in FIG. 3, the image scanning apparatus 100 may receive a scan-to-DLNA command from an external apparatus (e.g., the DLNA apparatus 20 illustrated in FIG. 1) and perform a scan-to-DLNA function.

Referring to FIG. 4, the user interface window 400 can include a first area 410 to display at least one searched DLNA apparatus, a second area 420 to set a scan option, and a third area 430 to receive a DLNA apparatus re-search command.

The first area 410 can display a DLNA apparatus searched according to a user's scan-to-command. A DLNA apparatus re-search command can be displayed on the third area 430. Although only a name and an IP address of the searched DLNA apparatus are displayed in FIG. 4 (e.g., "Adam (10.10.10.10)" and "Anthony Kim (10.10.10.5)" as illustrated in the first area 410 of FIG. 4),this is an example of information that can be displayed in the first area 410, which could include additional information. For example, if apparatus information is obtained from the DLNA apparatus during the process of searching the DLNA apparatus, the obtained apparatus information may also be displayed in first area 410 or in any other suitable area of user interface window 400.

The second area 420 can set a scan option by the user. Although only the scan options of a file name (e.g., file name 421), a resolution (e.g., resolution 423), and brightness of a scanned image (e.g., darkness 425) are set as illustrated in FIG. 4, other scan options of a general image scanning apparatus may be displayed in the second area 420 that can be set.

The third area 430 can receive the DLNA apparatus re-search command. If the user selects the third area 430, the image scanning apparatus 100 may re-search a connectible DLNA apparatus and may display a result of re-searching in the first area 410. Although a list of connectible DLNA apparatuses may be updated according to the user's re-search command, the list may be updated automatically based on a predetermined time (for example, every 10 seconds).

FIGS. 5 and 6 are views illustrating examples of apparatus information of a DLNA apparatus according to exemplary embodiments of the present general inventive concept.

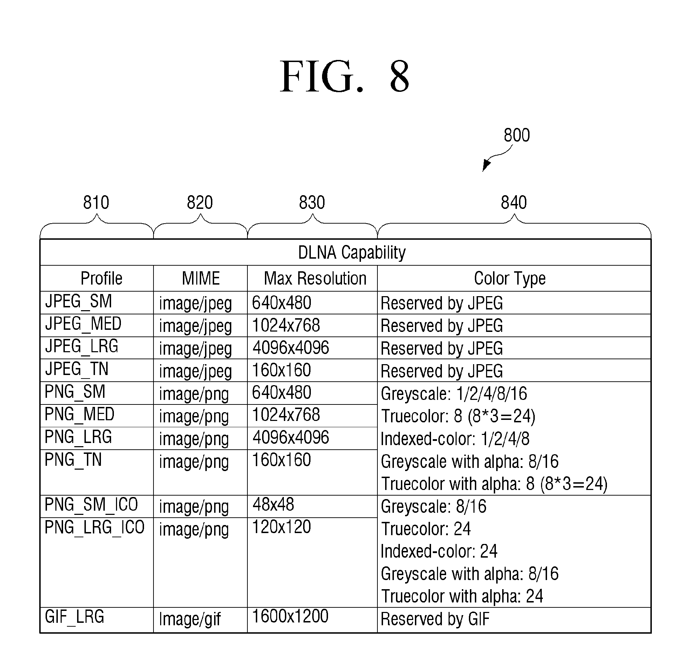

Referring to FIGS. 5 and 6, the image scanning apparatus 100 may identify apparatus information 520 of a DLNA apparatus connected through a "GetProtocol Info()" application programming interface (API) 510 from a connection manager service 500. More specifically, FIG. 6 illustrates a connection manager service 600 that the connected DLNA apparatus supports a JPEG profile of "JPEG_LRG" 610. Example JPEG profiles are illustrated and described in connection with FIG. 7 below, and FIG. 8 illustrates the types of JPEGs and setting values defined by a DLNA specification.

FIG. 7 is a view illustrating examples of JPEG profiles 700 according to exemplary embodiments of the present general inventive concept. In FIG. 7, four types of JPEG profiles are illustrated, but should not be considered as limiting.

For example, FIG. 7 illustrates a JPEG_SM profile 710, which may be a profile of image media class content having a small resolution (e.g., a predetermined low resolution). The JPEG_SM profile 710 may be used by devices such as cameras, cell phones, personal computers, tablet computers, image forming apparatuses (e.g., printers, scanners, copiers, fax machines) and/or digital media players to represent images in, for example, a compressed format. The images having the JPEG_SM profile 710 may have a predetermined small resolution.

FIG. 7 illustrates a JPEG_MED profile 720, which may be a profile of image media class content having a medium resolution (e.g., a predetermined medium resolution which is greater than the predetermined low resolution of JPEG_SM profile 710). The JPEG_MED profile 720 may be used by devices such as cameras, cell phones, personal computers, tablet computers, image forming apparatuses (e.g., printers, scanners, copiers, fax machines) and/or digital media players to represent images in, for example, a compressed format. The images having the JPEG_MED profile 720 may have a predetermined medium resolution that is greater that the predetermined small resolution of the JPEG_SM profile 710.

A JPEG_LRG profile 730, illustrated in FIG. 7, may be a profile of image media class content having a high resolution (e.g., a predetermined high resolution which is greater than the predetermined low resolution of JPEG_SM profile 710 and the predetermined medium resolution of the JPEG_MD profile 720). The JPEG_LRG profile 730 may be used by devices such as cameras, cell phones, personal computers, tablet computers, image forming apparatuses (e.g., printers, scanners, copiers, fax machines) and/or digital media players to represent images in, for example, a compressed format. The images having the JPEG_LRG profile 723 may have a predetermined high resolution that is greater that the predetermined small resolution of the JPEG_SM profile 710 and the predetermined medium resolution of JPEG_MD profile 720).

FIG. 7 illustrates a JPEG_TN profile 740, which may be a profile of an image having a thumbnail resolution (e.g., a predetermined resolution that may be smaller than the predetermined resolution of JPEG_SM profile 710).

FIG. 8 is a DLNA capability 800 view illustrating types of JPEG and a plurality of setting values defined by the DLNA specification according to exemplary embodiments of the present general inventive concept.

Referring to FIG. 8, the DLNA capability 800 can include a JPEG profile 810, a MIME (multipurpose internet mail extension) 820, a maximum resolution 830, and a color type 840are defined according to each of the JPEG profiles in the DLNA specification. For example, the JPEG profile 810 can include the JPEG_SM, JPEG_MED, JPEG_LRG, and JPEG_TN profiles as described above in connection with FIG. 7. The MIME 820 can include image, JPEG, GIF (graphics interchange format), or PNG (portable network graphics) data. The maximum resolution 830 can be the maximum resolution (e.g., 640x480, 1024x768, 4096x4096, 160x160, etc.) supported by a respective profile (e.g., JPEG profile 810). The color type 840 may include information such as a grayscale, truecolor (i.e. the color depth an/or the number of bits used to represent a color in a pixel), indexed color, and/or JPEG information.

FIG. 9 is a view illustrating an example of a lookup table 900 according to exemplary embodiments of the present general inventive concept.

Referring to FIG. 9, a lookup table 900 stores information on a plurality of JPEG profiles (e.g., JPEG_SM, JPEG_MED, JPEG_LRG, JPEG_TN, etc.) and a resolution (e.g., a maximum resolution such as 640x480, 1024x768, 4096x4096, 160x160, etc.), quality (e.g., draft normal, best, etc.), and a file format (e.g., JPEG, PNG, GIF, etc.) on each of the plurality of JPEG profiles in the form of a table.

Accordingly, the search unit 160 of the image scanning apparatus 100 may search a scan option corresponding to a selected apparatus using the lookup table 900. For example, if the selected DLNA apparatus 20 supports only the JPEG_SM profile, the search unit 160 may search draft quality, a resolution of 640x480, a JPEG file type as a scan option.

If the selected DLNA apparatus 20 supports a plurality of JPEG profiles, the search unit 160 can select one of the plurality of JPEG profiles according to pre-set priority and search a corresponding scan option. In view of this point, the plurality of JPEG profiles in the lookup table 800 may be arranged according to priority.

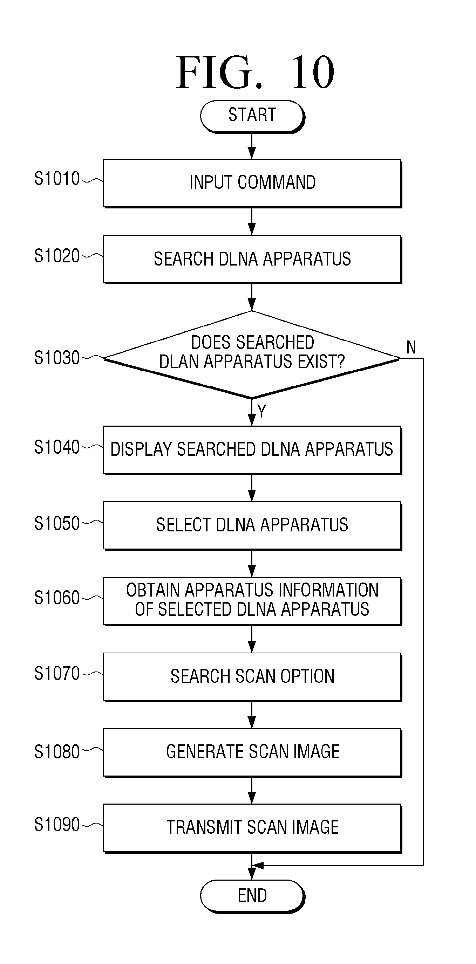

FIG. 10 is a flowchart illustrating a method of scanning according to exemplary embodiments of the present general inventive concept.

When a scan-to-DLNA command is received from a user at operation S1010, at least one DLNA apparatus that is communicatively coupled to the image scanning apparatus 100 is searched at operation S1020.

When the search determines that there is no DLNA apparatus communicatively coupled at operation S1030, there may be no connectible DLNA apparatus e displayed for the user. When there is a connectible DLNA apparatus as a result of searching, the at least one searched DLNA apparatus may be displayed at operation S1040.

A DLNA apparatus to transmit a document can be selected from the at least one displayed DLNA apparatus at operationS1050. More specifically, one DLNA apparatus to transmit the document may be selected by the user, or a plurality of DLNA apparatuses may be selected. At this time, the user may set a scan option on the document (e.g., the scan option can be set in second area 420 of user interface window 400 illustrated in FIG. 4, where a file name, a resolution, and/or a brightness of a scanned image may be set).

Apparatus information can be obtained from the selected DLNA apparatus at operation S1060 and a scan option can perform a search based on the apparatus information at operation S1070. Since the scan option is automatically searched and set using the apparatus information of the DLNA apparatus, the user can set the scan option optimized for the selected DLNA apparatus without performing a separate scan option setting operation. If the user selects the scan option in advance, the scan option on the selected DLNA apparatus may be searched considering the scan option selected by the user.

A scan image can be generated by scanning the document at operation S1080, with, for example, the scan unit 140 of the image scanning apparatus 100 illustrated in FIG. 1. More specifically, the scan image may be generated by scanning the document placed on a flatbed or supplied from the ADF of the scan unit 140. At this time, the scan image may be generated according to the searched scan option that is selected.

The generated scan image can be transmitted to the selected DLNA apparatus at operation S1090. More specifically, a detailed operation of transmitting the scan image to the selected DLNA apparatus will be explained below with reference to FIG. 11. At this time, the scan image may be stored in the image scanning apparatus 100 according to user's selection.

According to the method of scanning according to exemplary embodiments of the present general inventive concept, since the scan option is automatically set using the apparatus information of another DLNA apparatus, the user can transmit the image data scanned according to the scan option optimized for selected DLNA apparatus to the various DLNA apparatuses, by selecting the DLNA apparatus, so that user's convenience can be improved. The method of scanning in FIG. 10 may be executed by the image scanning apparatus 100 having the configuration of FIG. 1 and may also be executed by any other image scanning apparatus.

FIG. 11 is a view illustrating the detailed operation of transmitting of FIG. 10 according to exemplary embodiments of the present general inventive concept.

Referring to FIG. 11, if the scan image is generated, the image scanning apparatus 100 requests the selected DLNA apparatus 20 to transmit protocol information at operation S1110. In response to this request, the selected DLNA apparatus 20 may transmit information in a format and a protocol of data to be transmitted at operation S1120. The information on the format and the protocol may be included in the apparatus information on the selected DLNA apparatus. That is, if the information on the format and the protocol has been already transmitted to the image scanning apparatus 100 as the apparatus information, operations S1110 and S1120 of FIG. 11 may be omitted.

The image scanning apparatus 100 can request the selected DLNA apparatus 20 to be ready to connect at operation S1130, and, if 'response connection' is received from the selected DLNA apparatus 20 at operation S1140, the scanning apparatus 100 transmits the scan image to the selected DLNA apparatus 20 using the received protocol information at operation S1150. If the 'response connection' is not received from the selected DLNA apparatus 20, one or more additional requests may be made by the image scanning apparatus 100 to the selected DLNA apparatus 20 to connect. In exemplary embodiments of the present general inventive concept, when a predetermined number of requests have been made by the image scanning apparatus 100 to the selected DLNA apparatus 20 to connect, the image scanning apparatus 100 may display a message with the user interface 120 that a connection is not available with the DLNA apparatus 20, and the user may select another DLNA apparatus to request a connection with.

If transmission is completed through the above-described operations, the image scanning apparatus 100 can transmit 'connection complete' to the selected DLNA apparatus 20 and can notify that the transmission of the scan image is completed at operation S1160.

The present general inventive concept can also be embodied as computer-readable codes on a computer-readable medium. The computer-readable medium can include a computer-readable recording medium and a computer-readable transmission medium. The computer-readable recording medium is any data storage device that can store data as a program which can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can be transmitted through carrier waves or signals (e.g., wired or wireless data transmission through the Internet). Also, functional programs, codes, and code segments to accomplish the present general inventive concept can be easily construed by programmers skilled in the art to which the present general inventive concept pertains.

Although several embodiments of the present general inventive concept have been illustrated and described, it will be appreciated by those skilled in the art that changes may be made in these embodiments without departing from the principles of the general inventive concept, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image scanning apparatus which is connectible to a digital living network alliance (DLNA) apparatus, the image scanning apparatus comprising:
a DLNA apparatus search unit to search at least one DLNA apparatus connectible to the image scanning apparatus;
a user interface to select at least one of the searched DLNA apparatus;
a communication interface to obtain apparatus information from the selected DLNA apparatus;
a search unit to search a scan option based on the obtained apparatus information;
a scan unit to generate a scan image by scanning a document according to the searched scan option; and
a DLNA stack unit to transmit the generated scan image to the selected DLNA apparatus.

2. The image scanning apparatus as claimed in claim 1, wherein the user interface displays a list of the at least one searched DLNA apparatus and receives selection of at least one of the at least one displayed DLNA apparatus.

3. The image scanning apparatus as claimed in claim 1 or 2, wherein the user interface comprises:
a first area to display a list of the at least one searched DLNA apparatus; and
a second area to set a scan option on the document.

4. The image scanning apparatus as claimed in claim 3, wherein the search unit searches the scan option based on the scan option set through the second area and the obtained apparatus information.

5. The image scanning apparatus as claimed in any one of claims 1 to 4, wherein the apparatus information comprises a JPEG profile supported by a DLNA apparatus and an address of a DLNA apparatus.

6. The image scanning apparatus as claimed in claim 5, further comprising a storage unit to store a lookup table having information on a plurality of JPEG profiles and a resolution, quality, and a file format corresponding to each of the plurality of JPEG profiles,
wherein the search unit searches at least one of quality, a resolution, and a file format corresponding to the JPEG profile supported by the DLNA apparatus using the lookup table.

7. The image scanning apparatus as claimed in claim 6, wherein the user interface displays a scan option corresponding to each of the JPEG profiles supported by the DLNA apparatus and receives selection of a scan option to be applied to the document.

8. The image scanning apparatus as claimed in any one of claims 1 to 7, wherein the DLNA stack unit transmits the scan image so that the scan image is stored in a predetermined DLNA apparatus, and transmits a storage address of the scan image stored in the predetermined DLNA apparatus to the selected DLNA apparatus.

9. A method of scanning a document with an image scanning apparatus which is connectible to a digital living network alliance (DLNA) apparatus, the method comprising:
searching at least one DLNA apparatus connectible to the image scanning apparatus;
selecting at least one of the searched DLNA apparatus;
obtaining apparatus information from the selected DLNA apparatus;
searching a scan option based on the obtained apparatus information;
generating a scan image by scanning a document according to the searched scan option; and
transmitting the generated scan image to the selected DLNA apparatus.

10. The method as claimed in claim 9, wherein the selecting comprises:
displaying a list of the at least one searched DLNA apparatus on a user interface window; and
selecting at least one of the at least one displayed DLNA apparatus.

11. The method as claimed in claim 9 or 10, wherein the user interface window comprises a first area to display a list of the at least one searched DLNA apparatus and a second area to set a scan option on the document.

12. The method as claimed in claim 11, wherein the searching comprises:
searching the scan option based on the scan option set through the second area and the obtained apparatus information.

13. The method as claimed in any one of claims 9 to 12, wherein the apparatus information comprises a JPEG profile supported by a DLNA apparatus and an address of a DLNA apparatus.

14. The method as claimed in claim 13, wherein the searching comprises:
searching at least one of quality, a resolution, and a file format corresponding to the JPEG profile supported by the DLNA apparatus using a pre-stored lookup table,
wherein the lookup table is a table which stores information on a plurality of JPEG profiles and a resolution, quality, and a file format corresponding to each of the plurality of JPEG profiles.

15. The method as claimed in claim 14, further comprising:
displaying a scan option corresponding to each of the JPEG profiles supported by the DLNA apparatus; and
selecting a scan option to be applied to the document.
